# EUROPÄISCHE PATENTSCHRIFT

(11) **EP 0 645 437 B1**
(45) Veröffentlichungstag und Bekanntmachung des Hinweises auf die Patenterteilung: **19.03.1997**
(21) Anmeldenummer: 94114303.4
(22) Anmeldetag: 12.09.1994
(51) Int. Cl.: C09C 1/24, C01G 49/06

(54) **Farbreine Eisenoxid-Direktrotpigmente, Verfahren zu ihrer Herstellung sowie deren Verwendung**
Pure-colored iron oxide direct red pigments, process for their manufacture and their use
Pigments "Direct Red" d'oxyde de fer de couleur pure, procédé de leur fabrication et leur utilisation

(30) Priorität: 23.09.1993 DE 4332321
(43) Veröffentlichungstag der Anmeldung: 29.03.1995
(73) Patentinhaber: BAYER AG, 51368 Leverkusen (DE)
(72) Erfinder: Lerch, Klaus, Dr., D-47802 Krefeld (DE); Buxbaum, Gunter, Dr., D-47802 Krefeld (DE); Kiemple, Peter, Dr., D-47802 Krefeld (DE); Naumann, Rolf, Dr., D-47802 Krefeld (DE)

(56) Entgegenhaltungen:
- FR-A- 1 314 526
- GB-A- 2 271 767
- GB-A- 2 271 769
- DATABASE WPI Week 9140, Derwent Publications Ltd., London, GB; AN 91-292727 & JP-A-3 195 779 (SUMITUMO CHEM. IND.) 27. August 1991
- DATABASE WPI Week 8436, Derwent Publications Ltd., London, GB; AN 84-219945 & DD-A-209 559 (USTREDI PRO VYNALEZ)
- DATABASE WPI Week 8436, Derwent Publications Ltd., London, GB; AN 84-219945

## Beschreibung

Die vorliegende Erfindung betrifft neue Eisenoxid-Direktrotpigmente, Verfahren zu ihrer Herstellung sowie deren Verwendung.

Eisenoxidrotpigmente werden in der Baustoff-, Keramik-, Kunststoff- und Lackindustrie eingesetzt.

Es sind vier Verfahren zur Herstellung roter Eisenoxide bekannt (T.C. Patton, Pigment Handbook, Vol. 1, New York 1988, S. 288). Eines davon ist die direkte Fällung von roten Eisenoxiden. Hierbei werden eine Eisen(II)salzlösung und eine Alkalilösung in annähernd äquivalenten Mengen vermischt und durch die erhaltenene Eisen(II)hydroxid- bzw. -carbonatsuspension Luft hindurchgeleitet. Die so entstandene Eisen(III)oxidhydroxidkeimsuspension wird unter Zusatz von Eisen(II)salz- und Alkalilösung unter Erwärmen und Oxidieren mit sauerstoffhaltigen Gasen zum Rotpigment aufgebaut.

Gegenüber schwermetallhaltigen Rotpigmenten, wie z.B. CdSe, weisen Eisenoxide zwar ökologische Vorteile, jedoch den Nachteil einer für viele Anwendungen unzureichenden Farbreinheit auf.

Insbesondere in der Baustoffindustrie werden in letzter Zeit zunehmend farbreine Rotpigmente mit hohem Rotanteil verlangt um ästhetische Ziegelrottöne zu erreichen.

Es besteht somit ein Bedarf an ökologisch unbedenklichen, farbreinen Rotpigmenten.

Aufgabe der vorliegenden Erfindung ist es, Eisenoxidpigmente mit den beschriebenen Eigenschaften zur Verfügung zu stellen.

Überraschenderweise wurde nun gefunden, daß diese Anforderungen von neuartigen Eisenoxid-Direktrotpigmenten erfüllt werden, bei deren Herstellung an den bislang üblichen Prozeß ein einfacher Pigmentreifungsschritt bei Reaktionstemperatur angeschlossen wird. Reifungsschritte zur Veränderung der Pigmenteigenschaften sind zwar bereits bekannt, jedoch laufen diese meist unter extremen (z.B. hydrothermalen) Bedingungen ab. Umso überraschender war, daß bei einer derart schwerlöslichen und unreaktiven Verbindung wie alpha-Fe₂O₃ bereits unter milden Reaktionsbedingungen ein beachtlicher Reifungseffekt zu erzielen ist. Nach dem Reifungsschritt erhält man Pigmente, die im Rotanteil (a*) der Baustoffabtestung (Schwerspat) alle bislang bekannten Eisenoxidpigmente übertreffen.

Gegenstand der vorliegenden Erfindung sind somit Eisenoxidpigmente, welche dadurch gekennzeichnet sind, daß sie in der Baustoffabtestung einen Rotanteil von mehr als 33, vorzugsweise mehr als 34, CIELAB-Einheiten aufweisen.

Erhältlich sind die erfindungsgemäßen Eisenoxidpigmente dadurch, daß an den üblichen Prozeß der Herstellung einer Direktrotsuspension nach dem Fällverfahren ein Reifungsschritt angeschlossen wird, bei dem der pH-Wert der Suspension eingestellt und anschließend bei Reaktionstemperatur ohne weitere Begasung gerührt wird.

Gegenstand der vorliegenden Erfindung ist somit auch ein Verfahren zur Herstellung von Eisenoxiddirektrotpigmenten nach dem Fällverfahren, dadurch gekennzeichnet, daß nach Abschluß der Pigmentbildung der pH-Wert durch Zugabe von Alkalilösung auf 3 bis 5,5 bevorzugt 4 bis 4,5 eingestellt und die Suspension bei 70 bis 95°C, vorzugsweise bei 80 bis 90°C, ohne weitere Begasung 0,5 bis 30 Stunden, vorzugsweise 1 bis 10 Stunden gerührt wird.

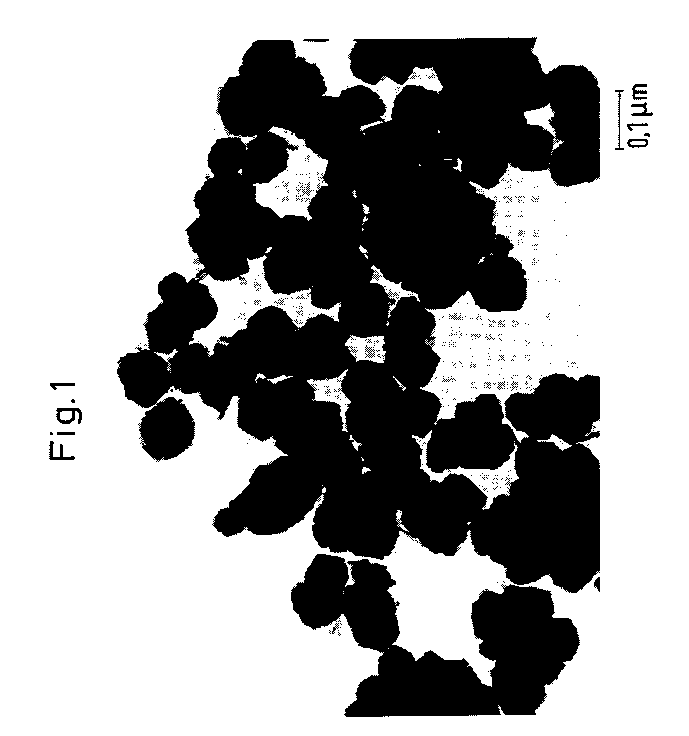

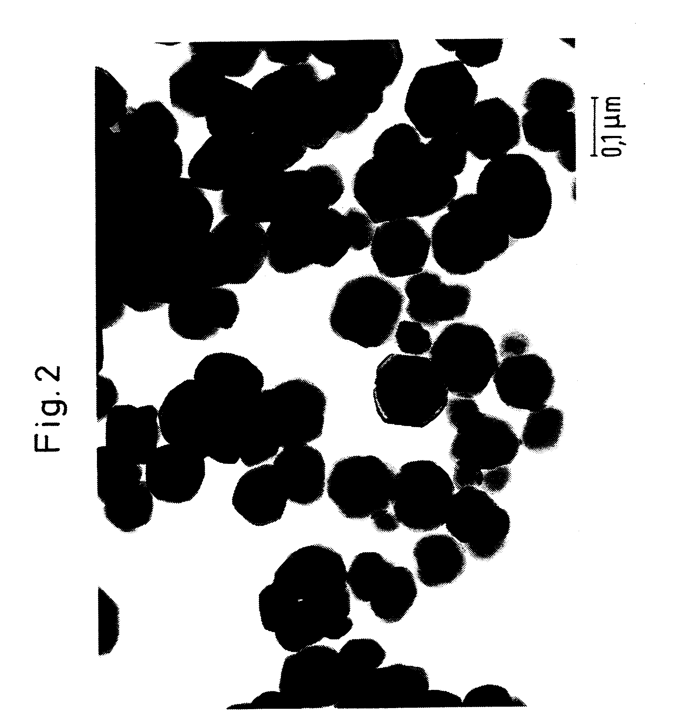

Im beschriebenen pH-Bereich ist alpha-Fe₂O₃ die stabilste Phase. Der Reifungsschritt führt somit zu einer Auflösung von Fremdphase (alpha-FeOOH), die sich beim Pigmentaufbau bilden kann. Als zweiter positiver Effekt der Pigmentreifung ist die Ausheilung der Pigmentoberfläche zu nennen. Wie man den elektronenmikroskopischen Aufnahmen (Fig. 1 und 2) entnehmen kann, wandelt sich die rauhe, unregelmäßige Teilchenoberfläche durch den Reifungsprozeß in glatte, sauber kristallisierte Flächen um. Der Effekt macht sich durch das Absinken der spezifischen Oberfläche (BET, DIN 66 131) bemerkbar (siehe Tab. 1).

Beide Effekte führen zu den beschriebenen koloristischen Vorteilen der erfindungsgemäßen Pigmente.

Zur Abtestung der Pigmente für Anwendungen im Baustoffbereich (DIN 53237) wurden Schwerspatpreßlinge angefertigt. Hierzu wurden 0,5 g Pigment mit 10 g Schwerspat in ein Schüttelglas mit ca. 250 ml Inhalt gegeben. Nach Hinzufügen von 200 Stahlkugeln von 5 mm Durchmesser wurde 3 Minuten mit einem automatischen Tischrundschüttler geschüttelt. Das Gemisch wurde zu einem zylindrischen Körper verpreßt.

Die Bestimmung der CIELAB-Daten (DIN 6174) erfolgte mit einem anwendungsorientierten Bindemittel. Dazu wurden Schwerspatmischungen nach einer von der Baustoffindustrie festgelegten Norm hergestellt (DIN 53 237, Abschnitt 7.2). Es wurden 0,5 g Pigment mit 10 g Schwerspat (Blanc Fixe G, Handelsprodukt der Solvay AG, synthetischer Schwerspat definierter Teilchengröße) in ein Schüttelglas mit ca. 250 ml Inhalt gegeben. Nach Hinzufügen von 200 Stahlkugeln von 5 mm Durchmesser wurde 3 min mit einem automatischen Tischrundschüttler geschüttelt.

Die Mischung aus Schwerspat und Pigment wurde in einer hydraulischen Presse (Stempeldurchmesser: 40 mm, Preßdruck: 30 bar, Preßdauer: 5 s) zu zylindrischen Körpern verpreßt. Um eine baustoffübliche matte Oberfläche des Zylinders zu erhalten, wurde zwischen Preßstempel und Schwerspatmischung ein handelsübliches Kopierpapier gelegt. Nach dem Verpressen wird das Kopierpapier abgezogen und die entstehende Fläche Koloristisch vermessen.

Die Normfarbwerte wurden mit einem handelsüblichen Farbmeßgerät bestimmt.

Verwendet wurde ein Farbmeßgerät der Meßgeometrie d/8° (diffuse Beleuchtung unter 8° zur Senkrechten). Gemessen werden die Normfarbwerte für den 2°-Normalbeobachter und die Normlichtart C (annähernd Tageslicht). Aus den Normfarbwerten wurde unter Zuhilfenahme der DIN 6174 die Helligkeit (L*), der Rotanteil (a*) und der Gelbanteil (b*) berechnet.

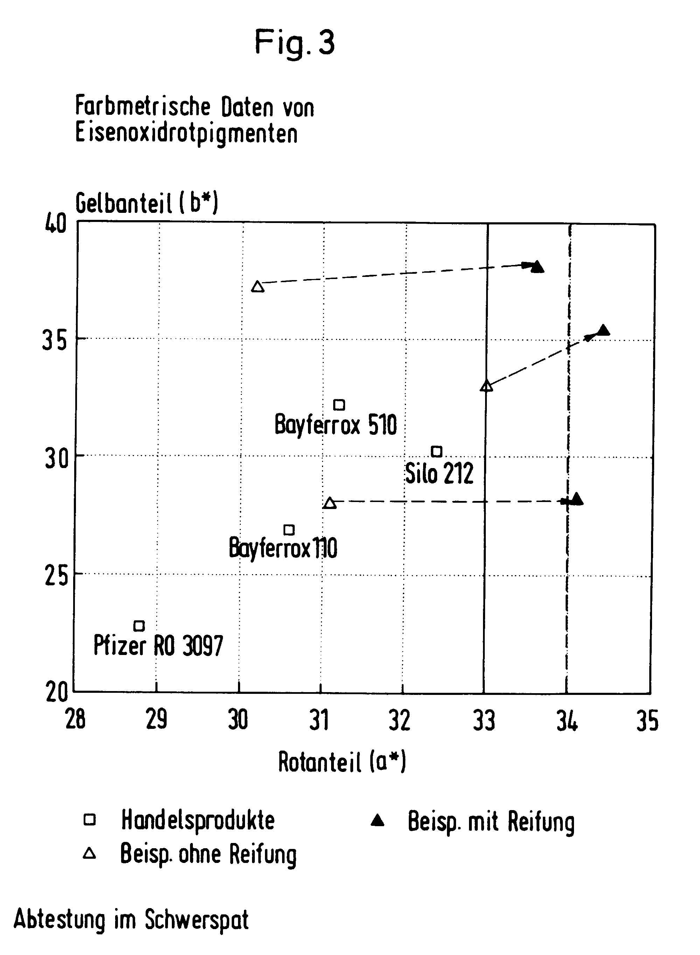

Tabelle 1 und Fig. 3 enthalten die farbmetrischen Daten einiger erfindungsgemäßer Pigmente und die Vergleichswerte einiger nach den bekannten Verfahren hergestellter Handelsprodukte. Die erfindungsgemäßen Pigmente weisen in der Abtestung für den Baustoffbereich höhere Rotanteile (a*) auf als alle bislang bekannten Eisenoxidrotpigmente (z.B. Bayferrox 510, Handelsprodukt der Bayer AG, herstellbar nach US-A 3 946 103 und Pfizer Croma Red Ro 3097, Handelsprodukt der Fa. Pfizer, USA, herstellbar nach US-A 2 785 991).

Durch den erfindungsgemäßen Reifungsprozeß wird der Rotanteil a* um 1,4 bis 3,4 Einheiten angehoben. Auf diese Weise werden in Baustoffanwendungen brilliante Ziegelrottöne erreicht, wogegen die durch Einsatz herkömmlicher Eisenoxide erhaltenen Farbtöne vergleichsweise schmutzig braun wirken.

Aufgrund der aus dem Reifungsprozeß resultierenden gleichmäßigen, isometrischen Teilchenform der erfindungsgemäßen Pigmente ergeben sich einige Verfahrensvorteile bei der Pigmentaufarbeitung. Die Abtrennung der Salzlauge kann nicht nur, wie üblich durch Filtration und Waschung, sondern auch durch Sedimentation erfolgen.

Die Rotpaste kann zu Slurries verarbeitet oder getrocknet und zu einem pulverförmigen Pigment gemahlen werden.

Alternativ ist auch eine Sprühtrocknung zu Pigmentgranulat möglich.

Bei der Trocknung kann ein Filterabwurf mit einem außerordentlich hohen Feststoffgehalt von 60 - 75 Gew.-% verarbeitet werden. Bei der üblichen Trocknung bzw. Granulation von Rotpigmenten sind Feststoffgehalte von ca. 50% üblich. Es muß somit bei der Trocknung der erfindungsgemäßen Pigmente wesentlich weniger Wasser verdampft werden als bislang üblich, was zu einer erheblichen Energie- und Kostenersparnis führt.

Eine bevorzugte Ausführungsform des erfindungsgemäßen Verfahrens besteht somit darin, daß Eisenoxidrotpasten getrocknet werden, die bei der Beschickung des Trocknungsaggregats einen Feststoffgehalt von mehr als 60% aufweisen.

Gegenstand der Erfindung ist auch die Verwendung der erfindungsgemäß hergestellten Pigmente zur Einfärbung im Baustoff-, Keramik-, Kunststoff- und Lackbereich sowohl als pulver- oder granulatförmige Pigmente als auch in Form von Pasten oder Slurries.

Fig. 1 zeigt eine elektronenmikroskopische Aufnahme eines nach dem Fällverfahren ohne Reifung hergestellten Direktrotpigments. Fig. 2 zeigt eine elektronenmikroskopische Aufnahme eines nach dem erfindungsgemäßen Verfahren durch Fällung und anschließende Reifung hergestellten Direktrotpigments. Fig. 3 zeigt die CIELAB-Daten einiger Eisenoxidrotpigmente in der Baustoffabtestung (Auftragung in der a*-b*-Ebene).

Nachfolgend wird die Erfindung beispielhaft beschrieben, wobei hierin keine Einschränkung auf die Beispiele zu sehen ist.

### Beispiel 1

In einem 100-m³-Reaktor werden 64 m³ gamma-Fe₂O₃-Keimsuspension mit einer Fe₂O₃-Konzentration von 17,3 g/l vorgelegt. 5000 kg FeSO₄ (Lösung mit 200 g/l FeSO₄) werden zugepumpt und die gesamte Vorlage auf 85°C aufgeheizt. Anschließend wird NaOH-Lösung (300 g/l) mit einer Geschwindigkeit von 90 kg/h zugepumpt und mit 300 m³/h Luft begast. Der Pigmentaufbau wird nach 9 Stunden abgebrochen und eine Probe entnommen. Anschließend wird der pH-Wert durch NaOH-Zugabe auf 4,2 eingestellt und die Suspension 3 Stunden ohne weitere Begasung bei 85°C gerührt.

Zwischen- und Schlußprobe werden getrennt aufgearbeitet und abgetestet. Hierzu werden die Proben filtriert, salzfrei gewaschen, bei 85°C getrocknet und das erhaltene Pigment gemahlen.

### Beispiel 2

In einem 100-m³-Reaktor werden 64,3 m³ gamma-Fe₂O₃-Keimsuspension mit einer Fe₂O₃-Konzentration von 19,4 g/l vorgelegt. 5000 kg FeSO₄ (Lösung mit 200 g/l FeSO₄) werden zugepumpt und die gesamte Vorlage auf 85°C aufgeheizt. Anschließend wird NaOH-Lösung (300 g/l) mit einer Geschwindigkeit von 90 kg/h zugepumpt und mit 300 m³/h Luft begast. Der Pigmentaufbau wird nach 7,75 Stunden abgebrochen und eine Probe entnommen. Anschließend wird der pH-Wert durch NaOH-Zugabe auf 4,5 eingestellt und die Suspension 5 Stunden ohne weitere Begasung bei 85°C gerührt.

Zwischen- und Schlußprobe werden getrennt aufgearbeitet und abgetestet. Hierzu werden die Proben filtriert, salzfrei gewaschen, bei 85°C getrocknet und das erhaltene Pigment gemahlen.

### Beispiel 3

In einem 100-m³-Reaktor werden 63,1 m³ gamma-Fe₂O₃-Keimsuspension mit einer Fe₂O₃-Konzentration von 14,3 g/l vorgelegt. 5000 kg FeSO₄ (Lösung mit 200 g/l FeSO₄) werden zugepumpt und die gesamte Vorlage auf 85°C aufgeheizt. Anschließend wird NaOH-Lösung (300 g/l) mit einer Geschwindigkeit von 90 kg/h zugepumpt und mit 300 m³ Luft begast. Der Pigmentaufbau wird nach 15 Stunden abgebrochen und eine Probe entnommen. Anschließend wird der pH-Wert durch NaOH-Zugabe auf 4,1 eingestellt und die Suspension 5,5 Stunden ohne weitere Begasung bei 85°C gerührt.

Zwischen- und Schlußprobe werden getrennt aufgearbeitet und abgetestet. Hierzu werden die Proben filtriert, salzfrei gewaschen, bei 85°C getrocknet und das erhaltene Pigment gemahlen.

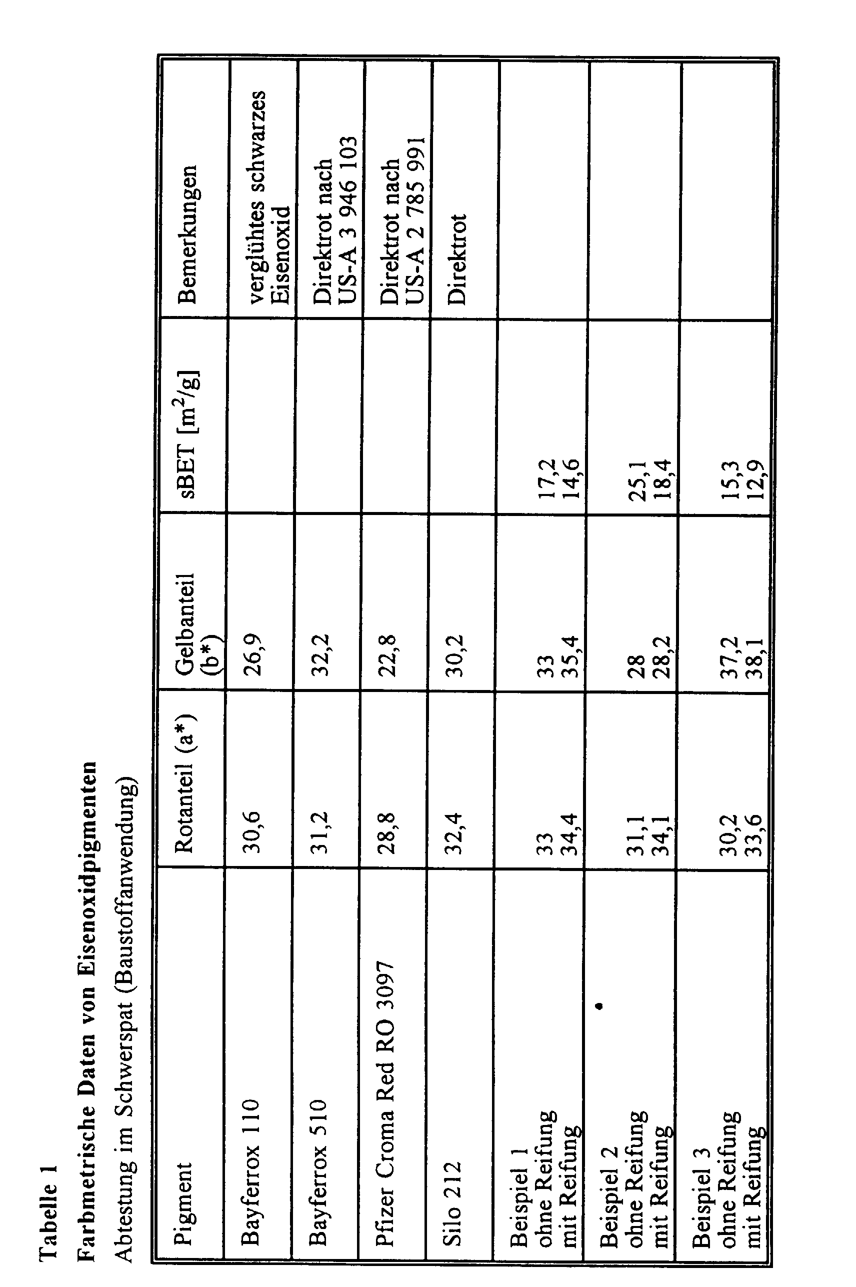

## Patentansprüche

1. Eisenoxidpigmente, dadurch gekennzeichnet, daß der Rotanteil a∗ in der Baustoffabtestung mehr als 33 CIELAB-Einheiten beträgt.

2. Eisenoxidpigment gemäß Anspruch 1, dadurch gekennzeichnet, daß der Rotanteil a* in der Baustoffabtestung mehr als 34 CIELAB-Einheiten beträgt.

3. Verfahren zur Herstellung farbreiner Eisenoxidpigmente gemäß einem der Ansprüche 1 oder 2 nach dem Fällungsverfahren, dadurch gekennzeichnet, daß der Pigmentbildung ein Reifungsprozeß durch Rühren ohne weitere Begasung angeschlossen wird, wobei vor der Reifung der pH-Wert auf 3,0 bis 5,5, bevorzugt 4,0 bis 4,5, eingestellt wird und die Temperatur der Suspension bei der Reifung bei 70 bis 95°C, bevorzugt bei 80 bis 90°C, liegt.

4. Verfahren gemäß Anspruch 3, dadurch gekennzeichnet, daß die Pigmentsuspension für 0,5 bis 30 Stunden, bevorzugt 1 bis 10 Stunden, gerührt wird.

5. Verfahren gemäß Anspruch 3 oder 4, dadurch gekennzeichnet, daß bei der Beschickung des Aggregates zur Trocknung der Eisenoxidpasten diese einen Feststoffgehalt von wenigstens 60 Gew.-% aufweisen.

6. Verwendung der Eisenoxidpigmente gemäß Ansprüchen 1 oder 2 oder hergestellt nach dem Vefahren nach einem oder mehreren der Ansprüche 3 bis 5, dadurch gekennzeichnet, daß das Pigment in Form von Pasten oder Slurries eingesetzt wird.

7. Verwendung der Eisenoxidpigmente gemäß Ansprüchen 1 oder 2 oder hergestellt nach dem Verfahren nach einem oder mehreren der Ansprüche 3 bis 5, dadurch gekennzeichnet, daß das Pigment in Form von Granulat eingesetzt wird.

## Claims

1. Iron oxide pigments, characterised in that the red component a* in the building material test is more than 33 CIELAB units.

2. Iron oxide pigment according to Claim 1, characterised in that the red component a* in the building material test is more than 34 CIELAB units.

3. Process for the production of pure-coloured iron oxide pigments according to one of Claims 1 or 2 by the precipitation process, characterised in that a process of ripening by agitation without further gassing is coupled to the pigment formation, wherein before ripening the PH is adjusted to 3.0 to 5.5, preferably 4.0 to 4.5, and the temperature of the suspension during ripening is about 70 to 95°C, preferably about 80 to 90°C.

4. Process according to Claim 3, characterised in that the pigment suspension is agitated for 0.5 to 30 hours, preferably 1 to 10 hours.

5. Process according to Claim 3 or 4, characterised in that the iron oxide pastes, on feeding to the unit for drying them, have a solids content of at least 60 wt.%.

6. Use of the iron oxide pigments according to Claims 1 or 2 or produced by the process according to one or more of Claims 3 to 5, characterised in that the pigment is used in the form of pastes or slurries.

7. Use of the iron oxide pigments according to Claims 1 or 2 or produced by the process according to one or more of Claims 3 to 5, characterised in that the pigment is used in the form of granular material.

## Revendications

1. Pigments d'oxydes de fer caractérisés en ce que leur fraction de rouge a*, dans les essais pour matériaux du bâtiment, est supérieure à 33 unités CIELAB.

2. Pigment d'oxyde de fer selon revendication 1, caractérisé en ce que sa fraction de rouge a*, dans les essais pour matériaux du bâtiment, est supérieure à 34 unités CIELAB.

3. Procédé de préparation de pigments d'oxydes de fer rouges à nuance pure selon une des revendication 1 ou 2 par le procédé de précipitation, caractérisé en ce que, à la suite de la formation du pigment, on procède à une opération de maturation par agitation sans injection de gaz, en réglant avant la maturation un pH 3,0 à 5,5, de préférence 4,0 à 4,5 et en maintenant la température de la suspension en cours de maturation à un niveau de 70 à 95°C, de préférence de 80 à 90°C.

4. Procédé selon revendication 3, caractérisé en ce que l'on agite la suspension de pigment pendant 0,5 à 30 h, de préférence pendant 1 à 10 h.

5. Procédé selon revendication 3 ou 4 caractérisé en ce que, à l'alimentation de l'appareil de séchage des pâtes d'oxyde de fer, ces dernières sont à une teneur en matières solides d'au moins 60 % en poids.

6. Utilisation des pigments d'oxydes de fer selon revendication 1 ou 2, ou préparés par le procédé selon une ou plusieurs des revendications 3 à 5, caractérisée en ce que le pigment est mis en oeuvre à l'état de pâtes ou de bouillies.

7. Utilisation des pigments d'oxydes de fer selon revendication 1 ou 2 ou préparés par le procédé selon une ou plusieurs des revendications 3 à 5, caractérisée en ce que le pigment est mis en oeuvre sous forme de granules.
